# EUROPEAN PATENT SPECIFICATION

(11) **EP 4 492 111 B1**
(45) Date of publication and mention of the grant of the patent: **08.04.2026**
(21) Application number: 24187479.1
(22) Date of filing: 09.07.2024
(51) Int. Cl.: G02B 6/44, H02G 15/013, H02G 3/08, H02G 15/007

(54) **COMPRESSION SEALING MECHANISM ON FIBER OPTIC TERMINALS**
KOMPRESSIONSDICHTUNGSMECHANISMUS AN FASEROPTISCHEN ANSCHLÜSSEN
MÉCANISME D'ÉTANCHÉITÉ PAR COMPRESSION SUR DES BORNES DE FIBRES OPTIQUES

(30) Priority: 12.07.2023 US 202363526308 P
(43) Date of publication of application: 15.01.2025
(73) Proprietor: Corning Research & Development Corporation, Corning, New York 14831 (US)
(72) Inventor: KLAK, Robert Tomasz, 98220 Zdunska Wola (PL); KRECZMER, Wojciech, 91-849 Lodz (PL); ZAPPEK, Andreas, 46539 Dinslaken (DE)
(74) Representative: Reddie & Grose LLP

(56) References cited:
- US-A1- 2008 170 832
- US-A1- 2009 058 018
- US-A1- 2021 011 239

## Description

### PRIORITY APPLICATION

This application claims the benefit of priority of U.S. Provisional Application No. 63/526,308, filed on July 12, 2023.

### FIELD

The invention relates to fiber optic terminal components and more particularly, to compression sealing mechanisms for fiber optic terminals.

### BACKGROUND

Cables (such as used to carry communication fiber) are often routed in and out of communications equipment cabinets and other enclosures in order to connect with various communications equipment. The cables are often secured at the entry point(s) into the enclosures to maintain a certain arrangement, and in some cases, to provide added stability. Current securing mechanisms include cable glands, cable ties, sealing foams, or other structures that require additional tools for installation. Cable glands are expensive and require a high level of skill from installers. Alternatively, although cable ties are less expensive than cable glands, cable ties cause problems over time. Both cable glands and cable ties require the installer to measure the outer diameter of the cable being installed and then to use a properly sized cable gland or cable tie wrap, accordingly, which requires additional time and is sometimes difficult when space is limited.

Sealing foams are generally designed for a given and limited cable diameter causing challenges for installers if a wide range of outer diameters of cables are required in the equipment. This can result in an installer first measuring the outer diameter of the cable they want to install into the equipment, and then either (1) removing the corresponding amount of foam according to the measured diameter or (2) putting tape around the cable jacket to ensure no gap if there is a size mismatch between the outer diameter of the cable and the cutout of the foam.

Improvements in the foregoing are desired.

A compression sealing mechanism is known from US2021/011239 as well as US2009/058018, while US2008/170832 discloses a cable enclosure.

### SUMMARY

The invention is defined in the independent claims to which reference should now be made. Advantageous feature set forth in the dependent claims.

In general, the present invention relates to a terminal having a compression sealing mechanism by which sealing foam is compressed onto cables to create a seal for a terminal. The compression sealing mechanism includes a compression releaser that is moveable between a first position and a second position such that the sealing foam transitions between an uncompressed position to a compressed position, respectively, to effectuate the seal around the cables.

In one aspect of the invention, a terminal is provided. The terminal comprising: a base comprising a compression sealing mechanism and a first strain relief system; the compression sealing mechanism comprising a compression releaser rotatably coupled to the base, wherein the compression releaser is spaced from the first strain relief system; a cover coupled to the base, the cover comprising a plurality of compression ribs, the cover being movable between an open position and a closed position; a compression sealing element positioned between the compression releaser and the first strain relief system; wherein in the open position, the compression releaser is in a first position and the compression sealing element is not compressed; wherein in the closed position, the compression ribs contact the compression releaser to move the compression releaser to a second position where the compression sealing element is compressed between the compression releaser and the first strain relief system.

The first strain relief system may comprise a plurality of slots, wherein the plurality of slots are configured to receive at least one output cable. The compression releaser may comprise a head portion and a tail portion, wherein the tail portion is tapered from an axis of rotation of the compression releaser. The compression sealing element may comprise a slit defined therein, wherein the compression sealing element is configured to receive the at least one output cable in the slit. The terminal may further comprise a second strain relief system coupled to the first strain relief system such that a first row and a second row of slots are defined for each receiving at least one cable. The second strain relief system may comprise a hook, wherein the hook couples to a recess in the first strain relief system such that the first strain relief system and the second strain relief system are coupled together. The plurality of compression ribs may comprise a plurality of tapered edges that lead to an edge, and a straight edge; wherein when the cover is moved to the closed position, the compression releaser is in contact with at least one of the tapered edges and the straight edge such that the compression ribs apply forces in multiple directions onto the compression releaser.

A second aspect of the invention provides a method for sealing one or more cables in a terminal, the terminal comprising a base and a cover coupled to the base, wherein the base includes a compression sealing mechanism and a first strain relief system, and wherein the cover includes a plurality of compression ribs is provided. The method comprising: inserting a compression releaser into the base of the terminal, wherein the compression releaser is rotatably coupled to the base, and wherein the compression releaser is spaced from the first strain relief system; inserting a compression sealing element between the compression releaser and the first strain relief system; moving the cover from an open position to a closed position where the plurality of compression ribs contact the compression releaser to move the compression releaser from a first position where the compression sealing element is not compressed to a second position where the compression sealing element is compressed.

The method may further comprise: inserting a second strain relief system interposed with the first strain relief system such that a first row and a second row of slots are defined for each receiving at least one cable. The second strain relief system may further comprises a hook, wherein the hook couples the first strain relief system and the second strain relief system together. The compression sealing element may comprise a slit defined therein, wherein the compression sealing element is configured to receive the at least one cable in the slit. The method may further comprise: inserting the at least one cable through the first strain relief system and the compression sealing element, wherein the at least one cable is positioned in the slit. The plurality of compression ribs may comprise a plurality of tapered edges that lead to an edge, and a straight edge; wherein when the cover is moved to the closed position, the compression releaser is in contact with at least one of the tapered edges and the straight edge such that the compression ribs apply forces in multiple directions onto the compression releaser.

In a third aspect of the invention, a terminal assembly for housing optical fibers and optical cables is provided. The terminal assembly comprising: a base comprising a compression sealing mechanism and a first strain relief system; the compression sealing mechanism comprising a compression releaser rotatably coupled to the base, wherein the compression releaser is spaced from the first strain relief system; the first strain relief system comprising a first row of slots, wherein at least one cable passes through each slot of the first row of slots; a cover coupled to the base, the cover comprising a plurality of compression ribs, the cover is movable between an open position and a closed position; a compression sealing element positioned between the compression releaser and the first strain relief system; wherein in the open position, the compression releaser is in a first position and the compression sealing element is not compressed; wherein in the closed position, the compression ribs contact the compression releaser to move the compression releaser to a second position where the compression sealing element is compressed between the compression releaser and the first strain relief system.

In another embodiment, the compression releaser comprises an arm portion and a head portion, wherein the arm portion is tapered from an axis of rotation of the compression releaser. In another embodiment, the compression sealing element comprises a slit defined therein, wherein the compression sealing element is configured to receive the at least one cable in the slit. In another embodiment, the terminal assembly further comprising a second strain relief system coupled to the first strain relief system such that a second row of slots are defined for each receiving at least one cable. In another embodiment, the second strain relief system further comprises a hook, wherein the hook couples the first strain relief system and the second strain relief system together. In another embodiment, the plurality of compression ribs comprise a plurality of tapered edges that lead to an edge, and a straight edge; wherein when the cover is moved to the closed position, the compression releaser is in contact with at least one of the tapered edges and the straight edge such that the compression ribs apply forces in multiple directions onto the compression releaser.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiments, and together with the Detailed Description serve to explain principles and operation of the various embodiments. As such, the disclosure will become more fully understood from the following Detailed Description, taken in conjunction with the accompanying Figures, in which:
FIG. 1 is a perspective view of a terminal in accordance with a first embodiment of the invention;
FIG. 2 is a perspective view of a cover of the terminal of FIG. 1 in accordance with the first embodiment of the invention;
FIG. 3 is a perspective view of a base of the terminal of FIG. 1 in accordance with the first embodiment of the invention;
FIG. 3A is an enlarged perspective view of a compression sealing mechanism in the base of FIG. 3 in accordance with the first embodiment of the invention;
FIG. 4 is an exploded view of the compression sealing mechanism of FIG. 3A;
FIG. 5 is a side view of a compression releaser of the compression sealing mechanism of FIG. 4;
FIGS. 6-6B are perspective views of the base of FIG. 3 and illustrate the coupling of the compression releaser of FIG. 5 to the base along with its movement within the base once coupled in accordance with the first embodiment of the invention;
FIGS. 7A and 7B are enlarged perspective views of the base of FIG. 3 illustrating coupling a second strain relief system shown in FIG. 4 to the compression sealing mechanism of FIG. 3A in accordance with the first embodiment of the invention;
FIGS. 8-11 illustrate assembly of the compression sealing mechanism of FIG. 3A with the sealing foam in accordance with the first embodiment of the invention; and

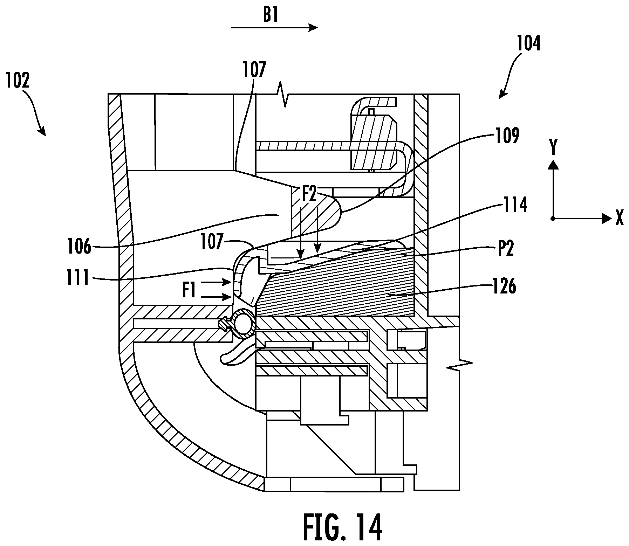

FIGS. 12-14 are cross-sectional views of the sealing function of the compression sealing mechanism of FIG. 3A when the cover of FIG. 2 is moved from an open position to a closed position in accordance with the first embodiment of the invention.

### DETAILED DESCRIPTION

Various embodiments will be clarified by examples in the description below. In general, the present disclosure relates to a compression sealing mechanism by which sealing foam is compressed onto cables to create a seal for a terminal. The compression sealing mechanism includes a compression releaser that is moveable between a first position and a second position such that the sealing foam transitions between an uncompressed position to a compressed position, respectively, to effectuate the seal around the cables.

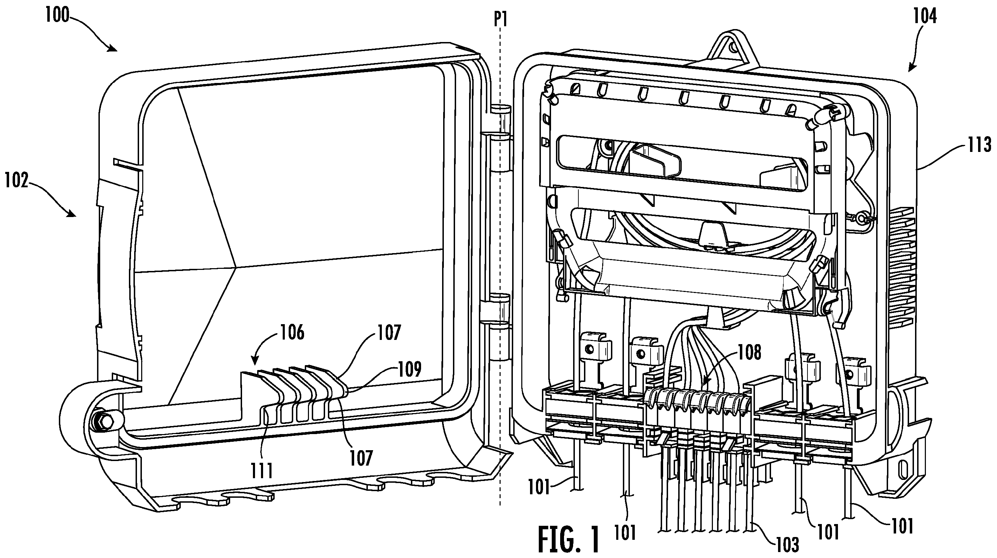

Referring first to FIGS. 1-3, a terminal 100 is shown. Terminal 100 comprises a cover 102 and a base 104 where the cover 102 and the base 104 are hingedly coupled to each other. As shown and discussed herein, cover 102 and base 104 are hingedly coupled to each other such that cover 102 is moveable between an open position and a closed position as discussed herein.

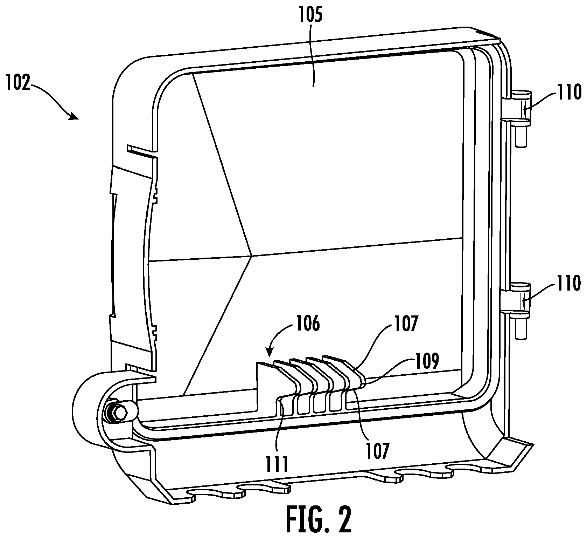

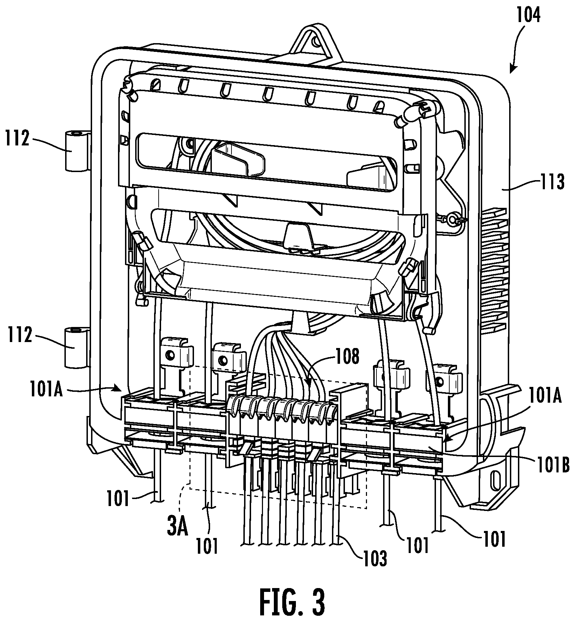

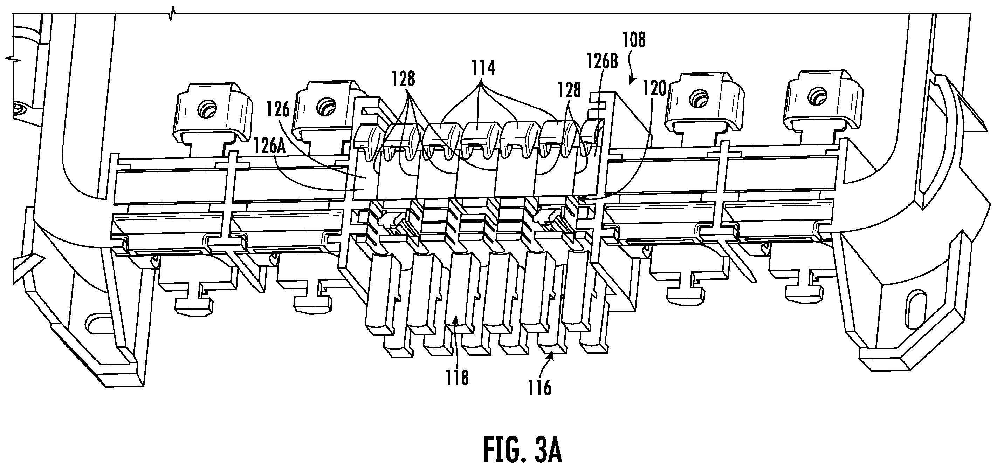

Referring briefly to FIG. 2, cover 102 comprises a cover panel 105 and a plurality of compression ribs 106. Cover panel 105 is sized and configured to have substantially the same dimensions as base 104 such that cover panel 105 spans an interior of base 104 and thereby, provides protection of an interior of base 104 from external elements (e.g., debris, etc.). Cover panel 105 further includes hinges 110 that are configured to be received within hinge receivers 112 (FIG. 3) when cover 102 is coupled to base 104. When cover 102 is coupled to base 104, hinges 110 and hinge receivers 112 define a pivot axis P1 (FIG. 1) around which cover 102 and/or base 104 can rotate to toggle terminal 100 between an open configuration and a closed configuration.

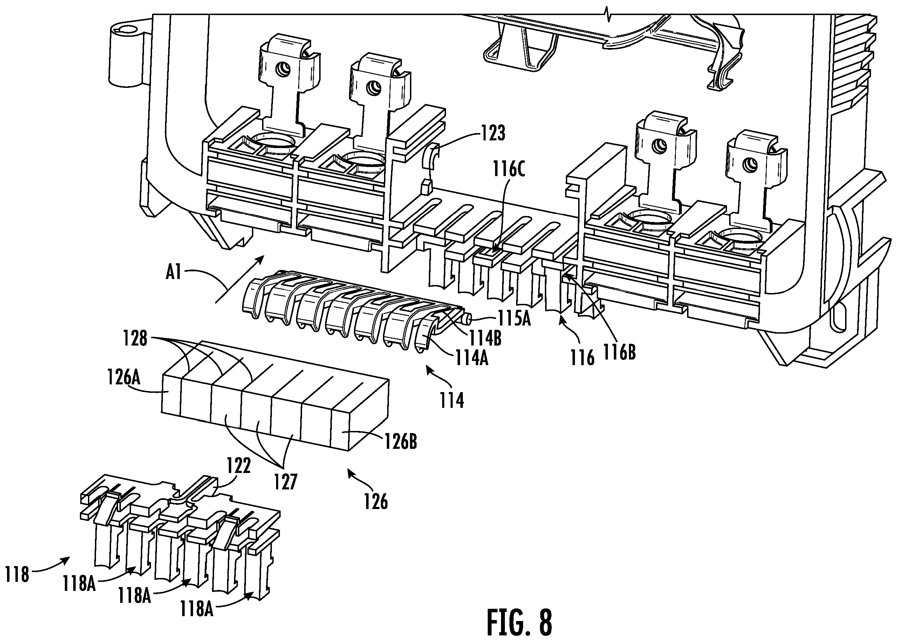

As mentioned previously, cover 102 includes a plurality of compression ribs 106. Compression ribs 106 are configured to contact a compression release mechanism 108 of base 104 when moving cover 102 to a closed position. In particular, compression ribs 106 contact compression release mechanism 108 and apply forces in multiple directions onto compression releaser 114 (FIG. 3A) and compression sealing element 126 (FIG. 8) as discussed in greater detail herein. As shown in FIG. 2, the plurality of compression ribs 106 have tapered edges 107 that lead to an edge 109. As discussed herein, edge 109 engages with compression releaser 114 (FIG. 3A) of compression release mechanism 108 as cover 102 is moved to a closed position to move compression releaser 114 to a first position. In addition, tapered edges 107 contact compression releaser 114 to apply forces onto the compression releaser 114 and onto compression sealing element 126 (FIG. 8) when cover 102 is in the closed position and compression releaser is in a second position as discussed in greater detail herein. The plurality of compression ribs 116 also includes a straight edge 111. Straight edge 111 contacts compression releaser 114 when cover 102 is in the closed position to apply a force onto the compression releaser 114 as discussed in greater detail herein. In some embodiments, compression ribs 106 are made of polycarbonate, acrylonitrile butadiene styrene, or the like. However, it is within the scope of the present disclosure that in alternate embodiments, other suitable materials may be used.

Referring now to FIG. 3, base 104 provides an interior for housing optical fibers from cables 101 and output cables 103. In addition, base 104 provides internal routing within the interior of base 104 such that optical fibers from input cables 101 are connected to corresponding optical fibers from output cables 103 (e.g., via splice), which exit base 104 of terminal 100 as shown. Base 104 comprises a frame 113 to define an interior within the base and a compression sealing mechanism 108. Frame 113 also includes hinge receivers 112 that are configured to receive hinges 110 of cover 102 as discussed above and a plurality of openings 101A that are configured to receive input cables 101. As shown, the plurality of openings 101A include a sealing element 101B included therein to provide sealing onto input cable 101. In some embodiments, sealing element 101B is made of a foam material. However, it is within the scope of the present disclosure that alternate suitable materials may be used. While FIGS. 1-3 illustrate a terminal 100 having multiple cables 101 entering base 104, it is within the scope of the present disclosure that in some embodiments, a singular cable 101 enters terminal 100 with a plurality of output cables exiting terminal 100.

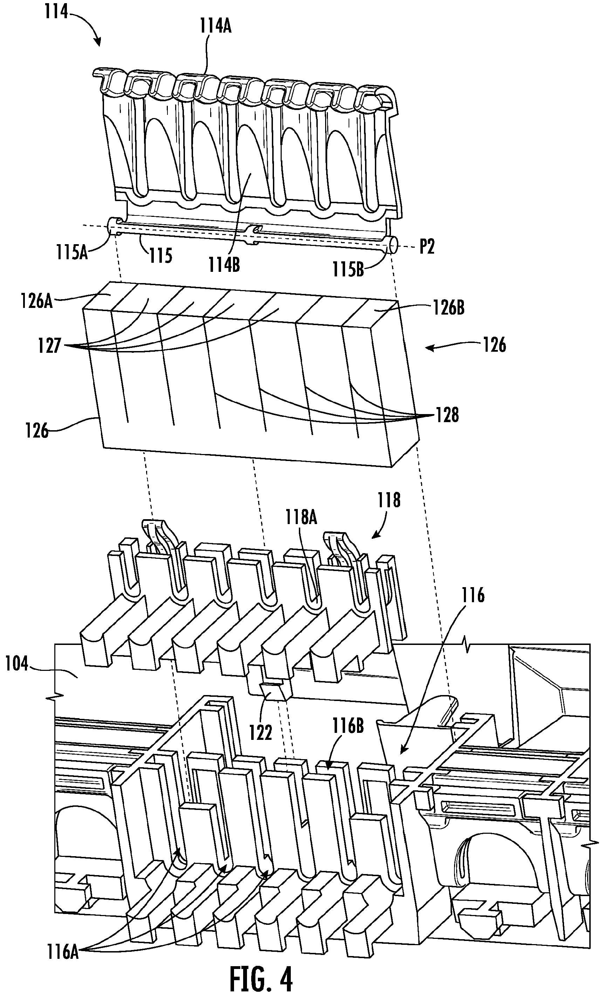

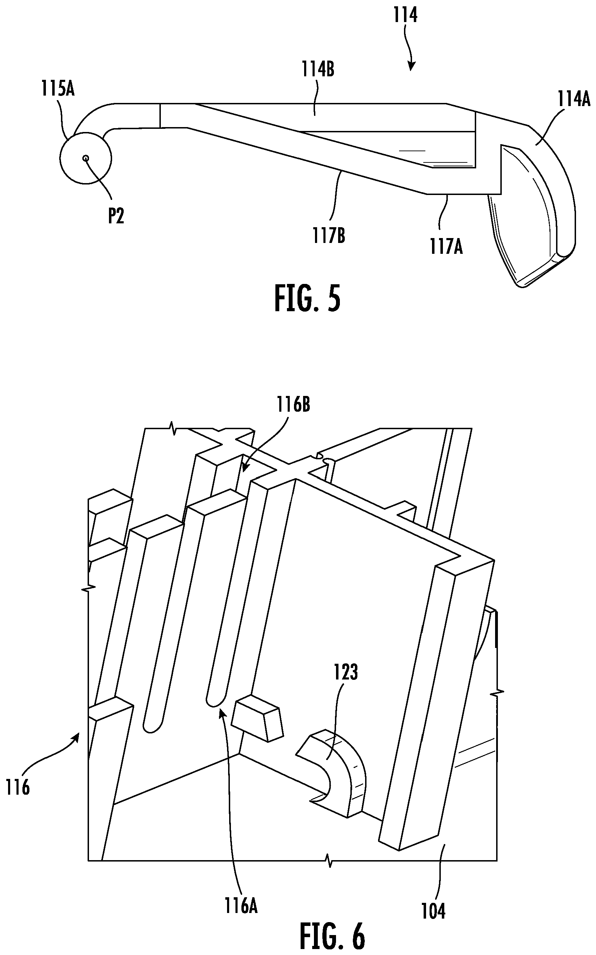

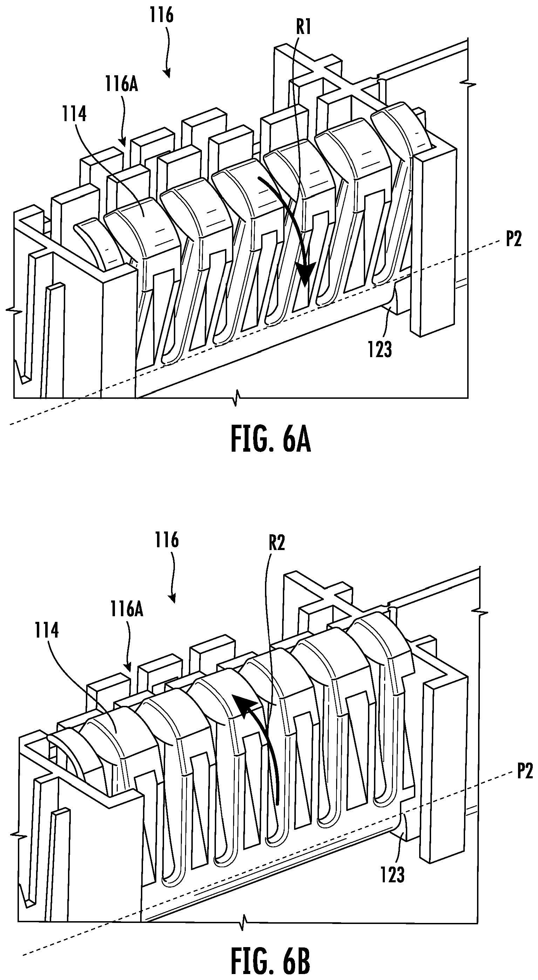

With reference to FIGS. 3A and 4, compression sealing mechanism 108 comprises a plurality of compression releasers 114, a first strain relief system 116, a second strain relief system 118, and a compression sealing element 126. Compression releasers 114 are coupled to the interior of the base 104 and are spaced from the strain relief systems 116, 118 to define an area 120 where a compression sealing element 126 is received as discussed herein. Referring briefly to FIG. 5, compression releasers 114 each comprise a head portion 114A and a tail portion 114B. Head portion 114A is configured to engage with compression ribs 105 and subsequently move to a first position when cover 102 is moving into a closed position and such engagement and movement changes the forces applied onto a compression sealing element 126 that is inserted into area 120 as discussed herein. Tail portion 114B is integrally formed with head portion 114A and comprises a flat edge 117A and an angled edge 117B. Flat edge 117A and angled edge 117B contact compression sealing element 126 and apply force onto the compression sealing element 126 to provide a seal as discussed herein. Tail portion 114B is coupled to a pivoting pole 115, which defines a pivoting axis P2 of the compression releasers 114. Stated another way, compression releasers 114 are coupled to a pivoting pole 115 where pivoting pole 115 defines a pivoting axis P2 about which compression releasers 114 rotate. In particular, with reference to FIGS. 6-6B, pivoting pole 115 includes ends 115A, 115B that couple to a hook 123 that is provided within base 104. When coupled to hook 123 and as shown in FIGS. 6A and 6B, compression releasers 114 can rotate in rotation directions R1, R2 about pivoting axis P2 to move compression releasers between a first position and a second position, respectively.

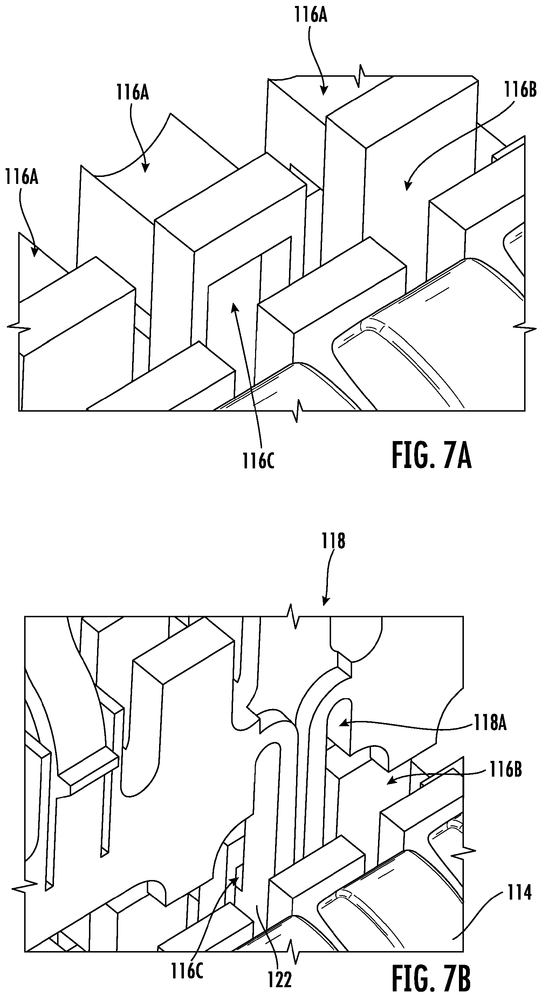

Referring back to FIG. 4, a first strain relief system 116 is provided within compression sealing mechanism 108 and function to provide fixation for cables that are housed within first strain relief system 116 and function to manage the torsional, tension, and bending forces that are applied onto the cables. First strain relief system 116 is integrally formed within base 104 and defines a plurality of slots 116A through which a plurality of output cables 103 can pass. First strain relief system 116 further includes a space 116B that is configured to receive a second strain relief system 118 and a recess 116C (FIG. 7A) that is a configured to receive coupling hook 122 of second strain relief system 118 as discussed herein.

As mentioned previously, compression sealing mechanism 108 includes a second strain relief system 118. As shown, second strain relief system 118 comprises a plurality of slots 118A and a coupling hook 122. Similar to slots 116A, slots 118A are configured to receive a plurality of output cables 103. Stated another way, slots 118A provide another row of openings through which a plurality of cables 103 can pass, i.e., a greater number of cables 103 can pass through compression sealing mechanism 108 of terminal 100.

Coupling hook 122 is configured to couple second strain relief system 118 to compression sealing mechanism 108. In particular, coupling hook 122 couples second strain relief system 118 to first strain relief system 116 such that multiples rows of slots 116A, 118A are provided through which output cables 103 can pass. With reference to FIGS. 7A and 7B, second strain relief system 118 is fed into space 116B such that coupling hook 122 couples to recess 116C of first strain relief system 116. Stated another way, second strain relief system 118 is inserted into space 116 so that coupling hook 122 engages with recess 116C of first strain relief system 116 thereby coupling first strain relief system 116 to second strain relief system 118.

Compression sealing element 126 comprises a plurality of fingers 127, a first end finger 126A, and second end finger 126B. As shown, there can be variability in widths among the fingers 126A, 126B, 127. The widths of the fingers 126A, 126B, 127 are defined by slits 128.

Slits 128 are formed in the sealing foam element 126 to define fingers 126A, 126B, and 127. Slits 128 are configured to align with slots 116A, 118A of first strain relief system 116 and second strain relief mechanism 118, respectively, such that output cables 103 that are housed within slots 116A, 118A also pass through slits 128 of compression sealing element 126. In this configuration, when compression sealing element 126 is compressed, compression sealing element 126 can compress around the output cables 103 that pass through slits 128 and provide a seal around the cables 103.

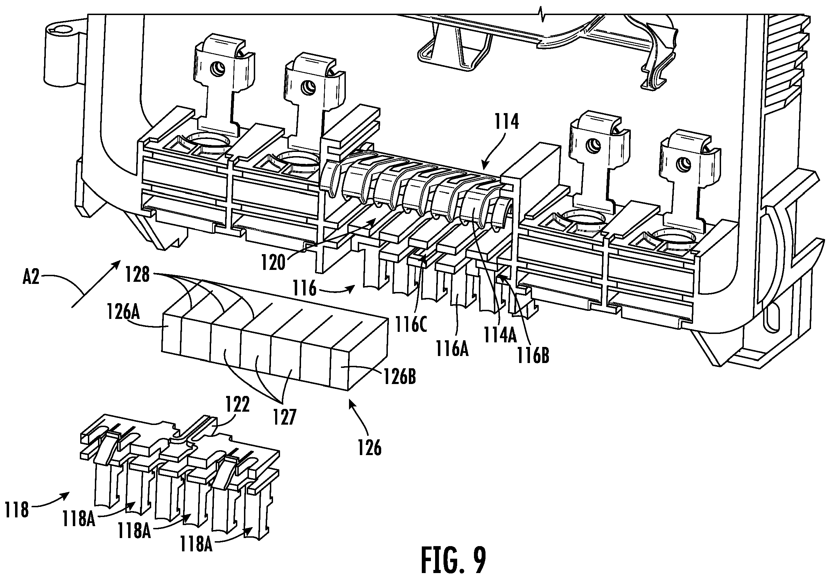

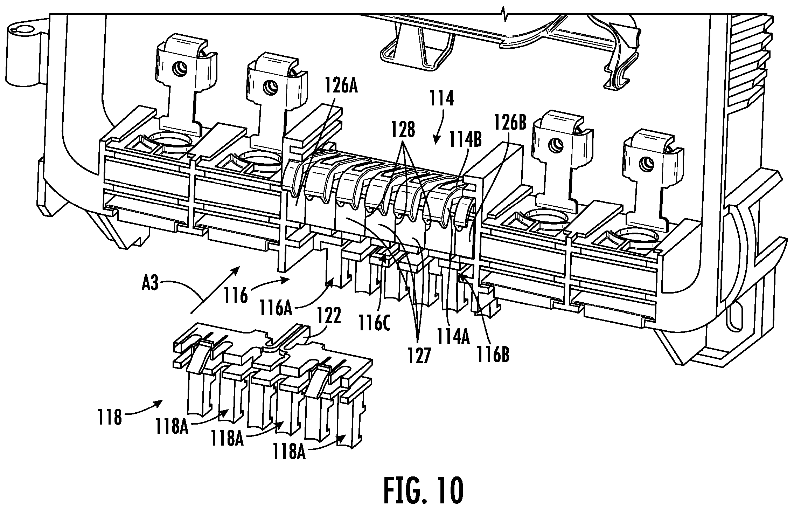

Referring now to FIGS. 8-10, a method of assembling compression sealing mechanism 108 is shown. As mentioned previously and shown in FIG. 8, compression releaser 114 is coupled to base 104 by coupling pivoting pole 115 to hook 123 as compression releaser 114 is moved along direction A1 to an interior of base 104. Referring now to FIG. 9, compression sealing element 126 is inserted into area 120 along direction A2 such that slits 128 of compression sealing element 126 are aligned with the slots 116A of first strain relief system116. Then, as shown in FIG. 10, second strain relief system 118 is inserted into space 116B of first strain relief system 116 along direction A3, and coupling hook 122 of second strain relief system 118 is received within recess 116C of first strain relief system 116 to couple second strain relief system 118 to first strain relief system 116 and align slots 118A of second strain relief system 118 with slits 128 of compression sealing element 126.

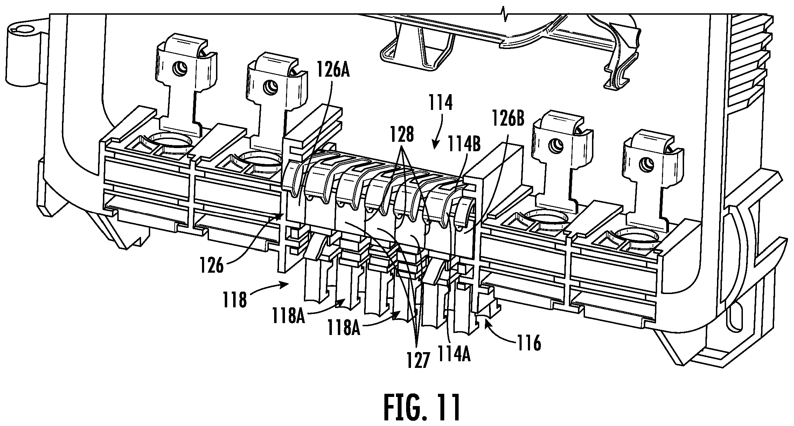

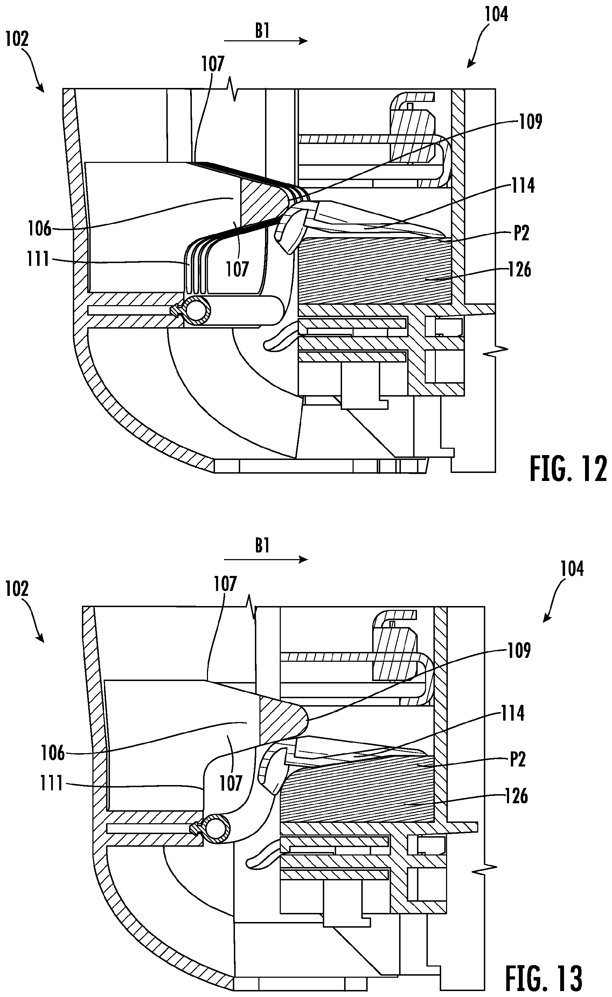

Referring now to FIGS. 11-13, method of applying the compression sealing mechanism 108 is shown. Referring first to FIG. 11, cover 102 is first moved along direction B1 to transition cover 102 from an open position to a closed position. In particular, cover 102 is moved via rotation about pivot axis P1. As shown in FIG. 11, as cover 102 moves along direction B1, edge 109 of compression ribs 106 engage with head portion 114A of compression releaser 114. This rotates compression releaser 114 about pivoting axis P2 to a first position where compression releaser 114 (e.g., edges 117A, 117B) is disengaged with compression sealing element 126. Then, with reference to FIG. 12, as compression ribs 106 continue moving along direction B1, edge 109 of compression ribs 106 disengages with head portion 114A of compression releaser 114. Upon disengagement, head portion 114A remains in contact with tapered edges 107 of compression ribs 106, which moves compression releaser 114 downward towards compression sealing element 126 such that edges 117A, 117B engage with compression sealing element 126. Then, when cover 102 is in the closed position and coupled to base 104 as shown in FIG. 13 (i.e., when cover 102 can no longer move along direction B1), compression releaser 114 is in a second position where head portion 114A is in contact with both tapered edges 107 and straight edge 111. By being in contact with tapered edges 107 and straight edges 111 of compression ribs 106, forces in different directions can be applied onto compression releaser 114 and onto compression sealing element 126 via head portion 114A and edges 117A, 117B of compression releaser 114. Stated another way, by being in contact with tapered edges 107 and straight edges 111 of compression ribs 106, compression ribs 106 apply a force F1 in the +x direction onto compression releaser 114 and compression sealing element 126 as defined in the Cartesian coordinate system provided in the Figure, and compression ribs 106 apply a force F2 in the -y direction onto compression releaser 114 and compression sealing element 126 as defined in the Cartesian coordinate system provided in the Figure. The dual force applied by compression ribs 106 enables greater compression of sealing foam around output cables 103 that are housed within the slits 128 and thereby, achieves a seal around the housed cables 103, which protects the interior of the terminal 100.

It will be apparent to those skilled in the art that various modifications to the preferred embodiments as described herein can be made without departing from the scope of the appended claims.

Thus, the disclosure covers the modifications and variations provided they come within the scope of the appended claims.

## Claims

1. A terminal (100) comprising:
a base (104) comprising a compression sealing mechanism (108) and a first strain relief system (116);
the compression sealing mechanism (108) comprising a compression releaser (114) coupled to the base, wherein the compression releaser (114) is spaced from the first strain relief system (116);
a cover (102) coupled to the base, the cover comprising a plurality of compression ribs (106), the cover (102) being movable between an open position and a closed position;
a compression sealing element (126) positioned between the compression releaser (114) and the first strain relief system (116);
wherein in the open position, the compression releaser (114) is in a first position and the compression sealing element (126) is not compressed;
wherein in the closed position, the compression ribs (106) contact the compression releaser (114) to move the compression releaser (114) to a second position where the compression sealing element (126) is compressed between the compression releaser (114) and the first strain relief system (116);
**characterized in that**
the compression releaser (114) is rotatably coupled to the base (104).

2. The terminal of claim 1, wherein the first strain relief system (116) comprises a plurality of slots (116A), wherein the plurality of slots (116A) are configured to receive at least one output cable (103).

3. The terminal of claim 1 or claim 2, wherein the compression releaser (114) comprises a head portion (114A) and a tail portion (114B), wherein the tail portion (114B) is tapered from an axis of rotation of the compression releaser (114).

4. The terminal of any of claims 2-3, wherein the compression sealing element (108) comprises a slit (128) defined therein, wherein the compression sealing element (108) is configured to receive the at least one output cable (103) in the slit (128).

5. The terminal of any of claims 1-4, further comprising a second strain relief system (118) coupled to the first strain relief system (116) such that a first row and a second row of slots (116A, 118A) are defined for each receiving at least one cable (103).

6. The terminal of claim 5, wherein the second strain relief system (118) further comprises a hook (122), wherein the hook (122) couples to a recess in the first strain relief system (116) such that the first strain relief system (116) and the second strain relief system (118) are coupled together.

7. The terminal of any of claims 1-6, wherein the plurality of compression ribs (106) comprise a plurality of tapered edges (107) that lead to an edge (109), and a straight edge (111);
wherein when the cover (102) is moved to the closed position, the compression releaser (114) is in contact with at least one of the tapered edges (107) and the straight edge (111) such that the compression ribs (106) apply forces in multiple directions onto the compression releaser (114).

8. A terminal assembly for housing optical fibers and optical cables comprising:
the terminal (100) of any preceding claim; and
the first strain relief system (116) comprising a first row of slots (116A) , wherein at least one cable passes through each slot of the first row of slots (116A).

9. A method for sealing one or more cables in a terminal (100), the terminal comprising a base (104) and a cover (102) coupled to the base, wherein the base includes a compression sealing mechanism (108) and a first strain relief system (116), and wherein the cover (102) includes a plurality of compression ribs (106),
the method comprising:
inserting a compression releaser (114) into the base of the terminal, wherein the compression releaser (114) is coupled to the base (104) and wherein the compression releaser (114) is spaced from the first strain relief system (116);
inserting a compression sealing element (126) between the compression releaser (114) and the first strain relief system (116); and
moving the cover (102) from an open position to a closed position where the plurality of compression ribs (106) contact the compression releaser (114) to move the compression releaser (114) from a first position where the compression sealing element (126) is not compressed to a second position where the compression sealing element (126) is compressed;
**characterized in that**
the compression releaser (114) is rotatably coupled to the base (104).

10. The method of claim 9, further comprising: inserting a second strain relief system (118) interposed with the first strain relief system (116) such that a first row and a second row of slots (116A, 118A) ) are defined for each receiving at least one cable (103).

11. The method of claim 10, wherein the second strain relief system further comprises a hook (122), wherein the hook (122) couples the first strain relief system (116) and the second strain relief system (118) together.

12. The method of claim10 or 11, wherein the compression sealing element comprises a slit (128) defined therein, wherein the compression sealing element (108) is configured to receive the at least one cable in the slit (128).

13. The method of any of claims 10 to 12, further comprising: inserting the at least one cable through the first strain relief system (116) and the compression sealing element (108), wherein the at least one cable is positioned in the slit (128).

14. The method of any of claims 9 to 13, wherein the plurality of compression ribs (106) comprise a plurality of tapered edges (107) that lead to an edge (109), and a straight edge (111);
wherein when the cover (102) is moved to the closed position, the compression releaser (114) is in contact with at least one of the tapered edges (107) and the straight edge (111) such that the compression ribs (106) apply forces in multiple directions onto the compression releaser (114).

## Patentansprüche

1. Anschluss (100), umfassend:
eine Basis (104), umfassend einen Kompressionsdichtungsmechanismus (108) und ein erstes Zugentlastungssystem (116);
wobei der Kompressionsdichtungsmechanismus (108) eine mit der Basis verbundene Kompressionsentlastungseinheit (114) umfasst, wobei die Kompressionsentlastungseinheit (114) vom ersten Zugentlastungssystem (116) beabstandet ist;
eine mit der Basis verbundene Abdeckung (102), wobei die Abdeckung eine Vielzahl von Kompressionsrippen (106) umfasst und die Abdeckung (102) zwischen einer offenen Position und einer geschlossenen Position beweglich ist;
ein Kompressionsdichtungselement (126), das zwischen der Kompressionsentlastungseinheit (114) und dem ersten Zugentlastungssystem (116) angeordnet ist;
wobei sich in der offenen Position die Kompressionsentlastungseinheit (114) in einer ersten Position befindet und das Kompressionsdichtungselement (126) nicht komprimiert ist;
wobei in der geschlossenen Position die Kompressionsrippen (106) mit der Kompressionsentlastungseinheit (114) in Kontakt kommen, um die Kompressionsentlastungseinheit (114) in eine zweite Position zu bewegen, in der das Kompressionsdichtungselement (126) zwischen der Kompressionsentlastungseinheit (114) und dem ersten Zugentlastungssystem (116) komprimiert wird;
**dadurch gekennzeichnet, dass**
die Kompressionsentlastungseinheit (114) drehbar mit der Basis (104) verbunden ist.

2. Anschluss nach Anspruch 1, wobei das erste Zugentlastungssystem (116) eine Vielzahl von Schlitzen (116A) umfasst, wobei die Vielzahl von Schlitzen (116A) konfiguriert ist, um mindestens ein Ausgangskabel (103) aufnehmen zu können.

3. Anschluss nach Anspruch 1 oder Anspruch 2, wobei die Kompressionsentlastungseinheit (114) einen Kopfabschnitt (114A) und einen Endabschnitt (114B) umfasst, wobei der Endabschnitt (114B) von einer Drehachse der Kompressionsentlastungseinheit (114) aus abgeschrägt ist.

4. Anschluss nach einem der Ansprüche 2-3, wobei das Kompressionsdichtungselement (108) einen darin definierten Schlitz (128) umfasst, wobei das Kompressionsdichtungselement (108) konfiguriert ist, um das mindestens eine Ausgangskabel (103) in dem Schlitz (128) aufzunehmen.

5. Anschluss nach einem der Ansprüche 1-4, weiterhin umfassend ein zweites Zugentlastungssystem (118), das mit dem ersten Zugentlastungssystem (116) gekoppelt ist, so dass eine erste Reihe und eine zweite Reihe von Schlitzen (116A, 118A) definiert sind, um für jeden mindestens ein Kabel (103) aufzunehmen.

6. Anschluss nach Anspruch 5, wobei das zweite Zugentlastungssystem (118) weiter einen Haken (122) umfasst, wobei der Haken (122) mit einer Aussparung im ersten Zugentlastungssystem (116) gekoppelt ist, so dass das erste Zugentlastungssystem (116) und das zweite Zugentlastungssystem (118) miteinander gekoppelt sind.

7. Anschluss nach einem der Ansprüche 1-6, wobei die Vielzahl von Kompressionsrippen (106) eine Vielzahl von abgeschrägten Kanten (107), die zu einer Kante (109) führen, und eine gerade Kante (111) umfasst;
wobei, wenn die Abdeckung (102) in die geschlossene Position bewegt wird, die Kompressionsentlastungseinheit (114) mit mindestens einer der abgeschrägten Kanten (107) und der geraden Kante (111) in Kontakt steht, so dass die Kompressionsrippen (106) Kräfte in mehrere Richtungen auf die Kompressionsentlastungseinheit (114) ausüben.

8. Anschlussanordnung zur Aufnahme von optischen Fasern und optischen Kabeln, umfassend:
der Anschluss (100) nach einem vorstehenden Anspruch; und
das erste Zugentlastungssystem (116), das eine erste Reihe von Schlitzen (116A) umfasst, wobei mindestens ein Kabel durch jeden Schlitz der ersten Reihe von Schlitzen (116A) verläuft.

9. Verfahren zum Abdichten eines oder mehrerer Kabel in einem Anschluss (100), wobei der Anschluss eine Basis (104) und eine mit der Basis verbundene Abdeckung (102) umfasst, wobei die Basis einen Kompressionsdichtungsmechanismus (108) und ein erstes Zugentlastungssystem (116) einschließt und wobei die Abdeckung (102) eine Vielzahl von Kompressionsrippen (106) einschließt,
das Verfahren umfassend:
Einfügen einer Kompressionsentlastungseinheit (114) in die Basis des Anschlusses, wobei die Kompressionsentlastungseinheit (114) mit der Basis (104) verbunden ist und wobei die Kompressionsentlastungseinheit (114) vom ersten Zugentlastungssystem (116) beabstandet ist;
Einfügen eines Kompressionsdichtungselements (126) zwischen der Kompressionsentlastungseinheit (114) und dem ersten Zugentlastungssystem (116); und
Bewegen der Abdeckung (102) aus einer offenen Position in eine geschlossene Position, in der die Vielzahl von Kompressionsrippen (106) mit der Kompressionsentlastungseinheit (114) in Kontakt kommt, um die Kompressionsentlastungseinheit (114) aus einer ersten Position, in der das Kompressionsdichtungselement (126) nicht komprimiert ist, in eine zweite Position zu bewegen, in der das Kompressionsdichtungselement (126) komprimiert ist;
**dadurch gekennzeichnet, dass**
die Kompressionsentlastungseinheit (114) drehbar mit der Basis (104) verbunden ist.

10. Verfahren nach Anspruch 9, weiter umfassend: Einfügen eines zweiten Zugentlastungssystems (118), das mit dem ersten Zugentlastungssystem (116) eingefügt ist, so dass eine erste Reihe und eine zweite Reihe von Schlitzen (116A, 118A) ) definiert sind, um für jeden mindestens ein Kabel (103) aufzunehmen.

11. Verfahren nach Anspruch 10, wobei das zweite Zugentlastungssystem weiter einen Haken (122) umfasst, wobei der Haken (122) das erste Zugentlastungssystem (116) und das zweite Zugentlastungssystem (118) miteinander verbindet.

12. Verfahren nach Anspruch 10 oder 11, wobei das Kompressionsdichtungselement einen darin definierten Schlitz (128) umfasst, wobei das Kompressionsdichtungselement (108) konfiguriert ist, um das mindestens eine Kabel in dem Schlitz (128) aufzunehmen.

13. Verfahren nach einem der Ansprüche 10 bis 12, weiter umfassend: Einführen des mindestens einen Kabels durch das erste Zugentlastungssystem (116) und das Kompressionsdichtungselement (108), wobei das mindestens eine Kabel in dem Schlitz (128) positioniert ist.

14. Verfahren nach einem der Ansprüche 9 bis 13, wobei die Vielzahl von Kompressionsrippen (106) eine Vielzahl von abgeschrägten Kanten (107), die zu einer Kante (109) führen, und eine gerade Kante (111) umfasst;
wobei, wenn die Abdeckung (102) in die geschlossene Position bewegt wird, die Kompressionsentlastungseinheit (114) mit mindestens einer der abgeschrägten Kanten (107) und der geraden Kante (111) in Kontakt steht, so dass die Kompressionsrippen (106) Kräfte in mehrere Richtungen auf die Kompressionsentlastungseinheit (114) ausüben.

## Revendications

1. Borne (100) comprenant :
une base (104) comprenant un mécanisme d'étanchéité par compression (108) et un premier système de soulagement de tension (116) ;
le mécanisme d'étanchéité par compression (108) comprenant un libérateur de compression (114) couplé à la base, dans laquelle le libérateur de compression (114) est espacé du premier système de soulagement de tension (116) ;
un couvercle (102) couplé à la base, le couvercle comprenant une pluralité de nervures de compression (106), le couvercle (102) étant mobile entre une position ouverte et une position fermée ;
un élément d'étanchéité par compression (126) positionné entre le libérateur de compression (114) et le premier système de soulagement de tension (116) ;
dans laquelle, dans la position ouverte, le libérateur de compression (114) est dans une première position et l'élément d'étanchéité par compression (126) n'est pas comprimé ;
dans laquelle, dans la position fermée, les nervures de compression (106) sont en contact avec le libérateur de compression (114) pour déplacer le libérateur de compression (114) vers une deuxième position où l'élément d'étanchéité par compression (126) est comprimé entre le libérateur de compression (114) et le premier système de soulagement de tension (116) ;
**caractérisée en ce que**
le libérateur de compression (114) est couplé en rotation à la base (104).

2. Borne selon la revendication 1, dans laquelle le premier système de soulagement de tension (116) comprend une pluralité de fentes (116A), dans laquelle la pluralité de fentes (116A) sont configurées pour recevoir au moins un câble de sortie (103).

3. Borne selon la revendication 1 ou la revendication 2, dans laquelle le libérateur de compression (114) comprend une partie tête (114A) et une partie queue (114B), dans laquelle la partie queue (114B) se resserre depuis un axe de rotation du libérateur de compression (114).

4. Borne selon l'une quelconque des revendications 2 à 3, dans laquelle l'élément d'étanchéité par compression (108) comprend une entaille (128) définie dans celui-ci, dans laquelle l'élément d'étanchéité par compression (108) est configuré pour recevoir le au moins un câble de sortie (103) dans l'entaille (128).

5. Borne selon l'une quelconque des revendications 1 à 4, comprenant en outre un deuxième système de soulagement de tension (118) couplé au premier système de soulagement de tension (116) de telle sorte qu'une première rangée et une deuxième rangée de fentes (116A, 118A) sont définies pour recevoir chacune au moins un câble (103).

6. Borne selon la revendication 5, dans laquelle le deuxième système de soulagement de tension (118) comprend en outre un crochet (122), dans laquelle le crochet (122) se couple à un évidement dans le premier système de soulagement de tension (116) de telle sorte que le premier système de soulagement de tension (116) et le deuxième système de soulagement de tension (118) sont couplés l'un à l'autre.

7. Borne selon l'une quelconque des revendications 1 à 6, dans laquelle la pluralité de nervures de compression (106) comprennent une pluralité de bords coniques (107) qui aboutissent à un bord (109), et un bord droit (111) ;
dans laquelle, lorsque le couvercle (102) est déplacé jusqu'à la position fermée, le libérateur de compression (114) est en contact avec au moins un des bords coniques (107) et le bord droit (111) de telle sorte que les nervures de compression (106) appliquent des forces dans de multiples directions sur le libérateur de compression (114).

8. Ensemble borne destiné à loger des fibres optiques et des câbles optiques comprenant :
la borne (100) selon une quelconque revendication précédente ; et
le premier système de soulagement de tension (116) comprenant une première rangée de fentes (116A), dans lequel au moins un câble traverse chaque fente de la première rangée de fentes (116A).

9. Procédé destiné à étanchéifier un ou plusieurs câbles dans une borne (100), la borne comprenant une base (104) et un couvercle (102) couplé à la base, dans lequel la base inclut un mécanisme d'étanchéité par compression (108) et un premier système de soulagement de tension (116), et dans lequel le couvercle (102) inclut une pluralité de nervures de compression (106),
le procédé comprenant :
l'insertion d'un libérateur de compression (114) dans la base de la borne, dans lequel le libérateur de compression (114) est couplé à la base (104) et dans lequel le libérateur de compression (114) est espacé du premier système de soulagement de tension (116) ;
l'insertion d'un élément d'étanchéité par compression (126) positionné entre le libérateur de compression (114) et le premier système de soulagement de tension (116) ; et
le déplacement du couvercle (102) d'une position ouverte à une position fermée où la pluralité de nervures de compression (106) sont en contact avec le libérateur de compression (114) pour déplacer le libérateur de compression (114) depuis une première position où l'élément d'étanchéité par compression (126) n'est pas comprimé à une deuxième position où l'élément d'étanchéité par
compression (126) est comprimé ;
**caractérisé en ce que**
le libérateur de compression (114) est couplé en rotation à la base (104).

10. Procédé selon la revendication 9, comprenant en outre : l'insertion d'un deuxième système de soulagement de tension (118) intercalé avec le premier système de soulagement de tension (116) de telle sorte qu'une première rangée et une deuxième rangée de fentes (116A, 118A) ) sont définies pour recevoir chacune au moins un câble (103).

11. Procédé selon la revendication 10, dans lequel le deuxième système de soulagement de tension comprend en outre un crochet (122), dans lequel le crochet (122) couple le premier système de soulagement de tension (116) et le deuxième système de soulagement de tension (118) l'un à l'autre.

12. Procédé selon la revendication 10 ou la revendication 11, dans lequel l'élément d'étanchéité par compression comprend une entaille (128) définie dans celui-ci, dans lequel l'élément d'étanchéité par compression (108) est configuré pour recevoir le au moins un câble dans l'entaille (128).

13. Procédé selon l'une quelconque des revendications 10 à 12, comprenant en outre : l'insertion du au moins un câble à travers le premier système de soulagement de tension (116) et l'élément d'étanchéité par compression (108), dans lequel le au moins un câble est positionné dans l'entaille (128).

14. Procédé selon l'une quelconque des revendications 9 à 13, dans lequel la pluralité de nervures de compression (106) comprennent une pluralité de bords coniques (107) qui aboutissent à un bord (109), et un bord droit (111) ;
dans lequel, lorsque le couvercle (102) est déplacé jusqu'à la position fermée, le libérateur de compression (114) est en contact avec au moins un des bords coniques (107) et le bord droit (111) de telle sorte que les nervures de compression (106) appliquent des forces dans de multiples directions sur le libérateur de compression (114).
